# EUROPEAN PATENT APPLICATION

(11) **EP 1 246 127 A2**
(43) Date of publication of application: **02.10.2002**
(21) Application number: 02007099.1
(22) Date of filing: 28.03.2002
(51) Int. Cl.: G06K 19/067

(54) **A method and a system for identifying a medicine**

(30) Priority: 29.03.2001 IL 14232601
(71) Applicant: Barak, Swi, Caesarea 38900 (IL)
(72) Inventor: Barak, Swi, Caesarea 38900 (IL)
(74) Representative: Möbus, Daniela, Dr.-Ing.

(57) **Abstract**

A method for encoding and decoding for identifying a medicine comprising:
a) encoding a code surface by attaching a number of conductive stripes on a non-conductive layer, where the length of each stripe represents a certain value;
b) reading the code by attaching an array of contacts to the code surface wherein reading method is:
   - the conductive stripes make a common connection between some of the contacts while the rest of the contacts remain isolated, which determines "isolated contacts" and "connected contacts";
   - the amount of connected contacts of each segment of the array recognizes the length of each conductive stripe;
c) decoding the code by recognizing a combination of values according to the length of the stripes.

## Description

### FIELD OF THE INVENTION

The present invention relates to a method and a system for identifying a medicine. More specifically, the present invention relates to a method and a system for encoding labels and decoding the information from the label to identify a medicine in a package.

### BACKGROUND OF THE INVENTION

Labels are use to identify objects in the way of writing information on a label and attaching it to an object or in the way of encoding a label and storing an information according to each code and retrieving the information by decoding the label code. Reliable identification is very important to ensure that the medical stuff is using the right prescription medicine.

There are several methods and systems for encoding and decoding labels. The known methods need a specific label position to read the code from a label. One of the spread methods is the barcode, when using the barcode method the reader and the barcode must be alined or a multi-position reader must be use, which is expensive and complicated.

There is therefore a recognized need for, and it would be highly advantageous to have, a new method and system for identifying a medicine that enables using circular label that can be read in any position.

### SUMMARY OF THE INVENTION

The present invention is method and a system for identifying a medicine by unique way of encoding and decoding labels.

According to the teachings of the present invention there is provided a method for encoding and decoding including:
(a) encoding a code surface by attaching a number of conductive stripes on a non-conductive layer, wherein each strip partly covers a segment of the non-conductive layer, the length of each of the strips on each segment represents a value and a combination of values represents a code;
(b) reading the code by attaching an array of contacts - divided into segments according to the code surface segments - to the code surface wherein reading method is:
   (i) the conductive strips make a common connection between some of the contacts that attached to the conductive strips while the rest of contacts remain isolated, determinates "isolated contacts" and "connected-contacts"; and
   (ii)the amount of said connected-contacts of each segment recognizes the length of each conductive strip; and
(c) decoding the code by recognizing a combination of values according to the length of the strips.

According to another aspect of the method of the present invention, the reading method is:
(i) the conductive strips make an electric connection with some of the contacts that attached to the conductive strips while the rest of contacts remain isolated, determinates "isolated contacts" and "connected-contacts"; and
(ii) the conductive strips are connected to an electric power and the electric power connected to the connected-contacts, sensing the electric power enables recognition of the connected-contacts.

By another aspect of the present method, the conductive strips start covering the segments in a common edge of the non-conductive layer.

By another aspect of the present method, the non-conductive layer is circular, the segments are circular and each of the conductive strip covers a sector of a segment.

By another aspect of the present method, in a circular form the conductive strips start covering the segments from a common radius.

By another aspect of the present method, the strips are non-conductive and said layer is conductive.

According to another aspect of the present invention, it is provided a system for encoding and decoding including:
(a) a code surface includes:
   (i) a non-conductive surface, divided into segments; and
   (ii) a number of conductive strips, each strip is attached and covers a sector of a segment of said non-conductive surface, wherein length of said strip represents a value and a combination of values represents a code;
(b) a code reader includes a contacts-array divided into segments of contacts, said contacts-array is for attach to the code surface for reading said code; and
(c) a controller operative for:
   (i) recognizing the location of connected-contacts that match said conductive strips;
   (ii) calculating the length of strip of each said segments, according to the number of said connected-contacts in a segment that connected to said strips; and
   (iii) decoding said code according to a combination of said length of said strips.

According to another aspect of the present invention, the systems' recognition of the connected-contacts is based on the common connection of the connected-contacts, wherein the common connection is made via the conductive strips.

According to another aspect of the present invention, the systems' recognition of the connected-contacts is based on sensing an electric power. The conductive strips are connected to an electric power and the recognition of the connected-contacts is based on the connection of the connected-contacts to the electric power via the strips.

According to a preferred embodiment, the system is further includes a solar cell located on the code surface for supplying an electric power and further includes a light source located on the reader for activating the solar cell.

According to another preferred embodiment, the conductive strips start covering the segments in a common edge of the code surface.

According to another preferred embodiment, the code surface is a circular label including a non-conductive layer divided into circular segments and conductive strips that attached to a sector of a segments and the reader includes circular array of contacts divided to a segments according to the segments of the non-conductive layer.

By another preferred embodiment the strips start covering the segments in a common radius.

By another preferred embodiment the code surface further includes a conductive area in the center of the circular label, the conductive area is connected to the strips for supplying power to the strips and wherein the power is supplied via the center of the reader, enables recognizing the connected-contacts by sensing power. Moreover, the conductive area is connected to the strips by means of thin conductor, the power bums the thin conductor in the first reading, which enables recognition of previous use.

By another aspect of the present invention, the code surface made of a conductive surface and anon-conductive layer with holes, attached to the conductive surface, the arrangement of the holes represent a code and decoding is done by recognizing the location of the holes, which is the location of the connected-contacts that connected with the conductive surface via the holes.

According to another aspect of the present invention, it is provided a system for read information from a medicine package. The medicine package is held turned over wherein its' bottom up, including:
(a) a medicine package holder that holds the in-use medicine package;
(b) a circular label - divided to circular segments - that attached to the bottom of the in-use medicine package, the circular label made of a non-conductive layer and conductive strips covering a sector of each segments of the non-conductive surface, length of the strips represent a code;
(c) a reader that pivotally joined to the holder and can rotate to attach the label, the reader made of a circular contacts array divide to segments according to the label segments; and
(d) a controller operative for:
(i) recognizing contacts of the circular contacts array that connected to the conductive strips;
   (ii) calculating length of each strip according to the number of the connected-contacts; and
   (iii) decoding the code according length of the strips.

By a preferred embodiment the circular label further includes a conductive area in the center of the label, connected to the strips via thin conductor, this thin conductor is burned in the first use by a power supplied by the reader, and the controller is further operative for recognizing previous use by checking the existing of the thin conductor.

### BRIEF DESCRIPTION OF THE FIGURES

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the figures:
Figure 1 illustrates the method for encoding and decoding, according to the present invention.
Figure 2 illustrates a circular label embodiment of the present invention with a circular reader.
Figure 3 illustrates a system for read a code from a label of in-use medicine package.

### DESCRIPTION OF THE PREFERED EMBODIMENTS

The present invention is a method and a system for encoding and decoding.

The principles and operation of the encoding and decoding method and system, according to the present invention may be better understood with reference to the drawing and the accompanying description.

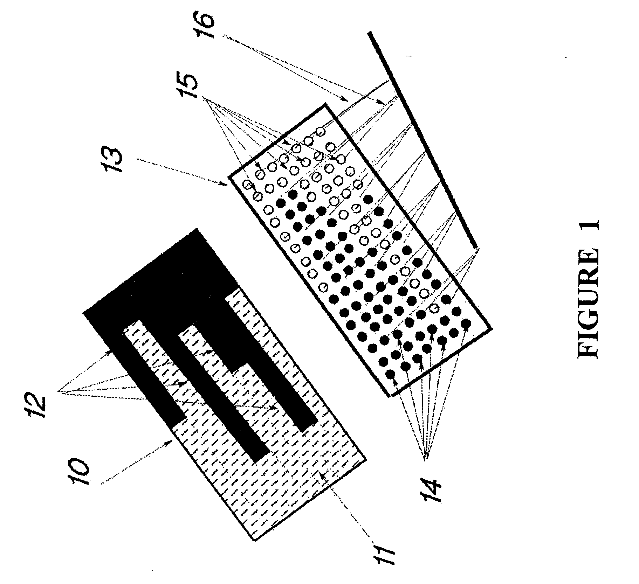

Referring now to the drawing, Figure 1 illustrates the method for encoding and decoding, according to the present invention. The code surface or a label **10** is made of a non-conductive surface or layer **11** and conductive strips **12** that attached on the non-conductive layer **11**, each strip along a segment of the layer **11**. The reader **13** is an array of electric contacts **14**, each contact connected via a cable **16** to a controller (not shown). To read the code the reader **13** is attached to the label **10**. The conductive strips **12** connect some of the contact **15** in a common connection, but the rest of contacts - that located in the area where the strips do not cover the segment - are isolated. The controller (not shown) recognizes the connected-contacts **15** either through the common connection of the connected-contacts **17**, which is done by the conductive strips **12** or through sensing electric power that is supplied to the conductive strips **12**. The controller (not shown) decodes the code according to a combination of strips length, which calculated according the number of connected-contacts **15** of each segment.

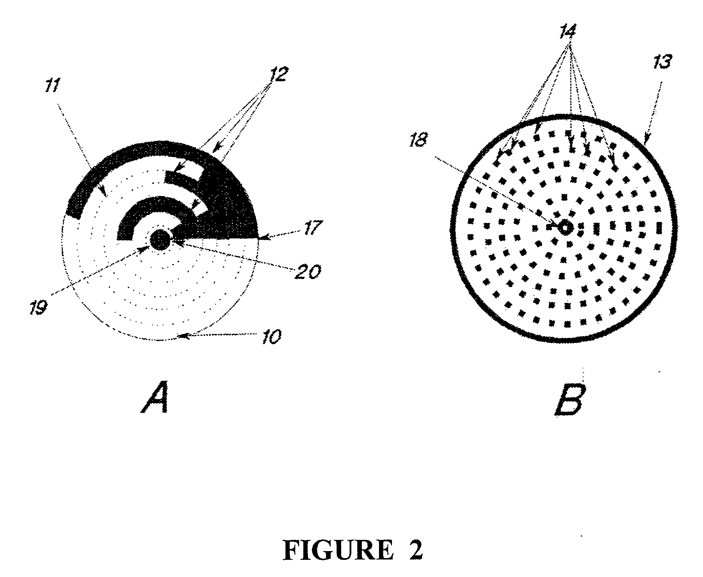

Figure 2 illustrates a circular embodiment of the present invention with a circular reader. The label **10** is circular and is made of a circular non-conductive layer **11** divided to circular segments and conductive strips **12** that covering a sector of each segment, each strip **12** covers a sector of other segment with a differ length. To read the code, the reader **13** is attached to the label **10** and the contacts array **14** is attached to the label **10,** while part of contacts are connected through the strips **12,** the rest are isolated. In the figure, the strips are start covering the segments in a common radius **17**. The reader has a special contact **18** in the center that supplies power. The power is connected to the strips **12** via a conductive area **19** in the center of the label and through a thin conductor **20**. The power is used for recognizing the connected-contacts when using the power sensing method of reading, and later to burn the thin conductor 20 and disconnect the conductive area **19** from strips **12**. The disconnection is done in the first use and enables the controller (not shown) to recognize previous use of the label.

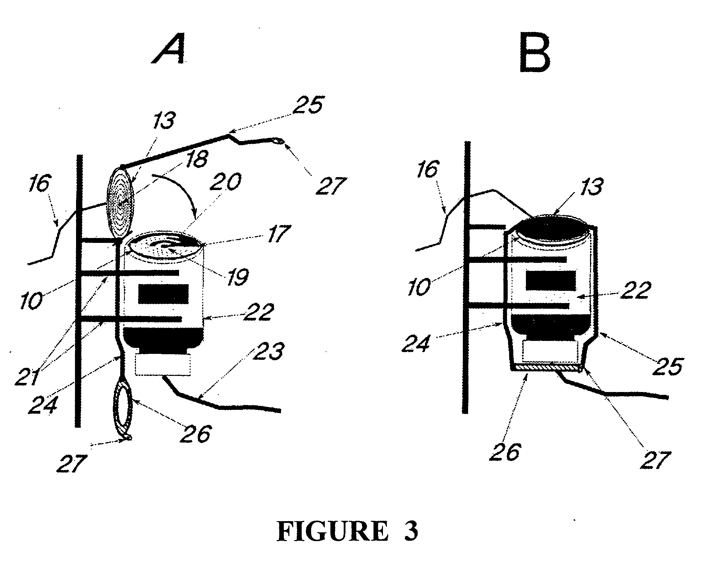

Figure 3 illustrates a system for read a code from a label that is attached on an in-use medicine package. Figure 3A illustrates the system when the medicine package **22** is placed in the system and the package holder **21** is open and Figure 3B illustrates the closed position of the system. In figure 3A, an in-use medicine package **22** is held, turned down, by a holder **21** for supplying the medicine via a pipe **23**. The package holder has a first clamp **24** and a second clamp **25**, a reader **13** pivotally joined between the clamps **24&25,** a bottom holder **26** pivotally joined to the first clam **24** and two parts of fast locker **27** are connected to the bottom holder **26** and to the second clamp **25**. To identify the in-use medicine package and its' contain, a circular label **10** is placed on its' bottom. A circular reader **13** pivotally joined with the holder clamps **24&25** enables the circular reader **13** to rotate for attaching to the circular label **10** when closing the clamps **24&25** as illustrated in figure 3B. The contacts of the reader **13** are connected via a cable **16** to a controller (not shown). A controller (not shown) identifies the connected-contacts of the reader **13** via a cable of wires **16**. The controller (not shown) uses the common radius **17** as a reference, to locate the strips and their starting point. The controller calculates the length of each strip for decoding the code.

To prevent second use of the same medicine package or at least to recognize previous use of the package, the system has the ability to recognize previous use. When the circular reader **13** is attached to the label **10**, electric power supply through the special contact **18** to the conductive area **19** of the label **10**. In the first time of reading, the conductive area **19** connected to the conductive strips **12** via a thin conductor **20**. Electrical current, from the special contact **18** through the thin conductor **20** and back via the strips and the contacts, burns the thin conductor **20**. In the late use, the controller recognizes the disconnection between the conductive area **19** and the strips **12** and acts a predetermined action.

Figure 3B illustrates the system when it is closed for use and the clamp **24&25** hold the medicine package **22**. The second clamp **25** was rotated and the bottom holder **26** was rotated as well and locked by the fast locker **27** for clamping the medicine package **22**. In this position the reader **13** is attached to the label **10** and the contacts information is transferred to the controller via the cable **16**. The controller identifies the medicine package **22** and checks for previous use by checking the existing of the thin conductor **20**. The information can display or transfer to any other device or controller.

Although the invention has been described in conjunction with specific embodiments thereof, it is evident that many alternatives, modifications and variations will be apparent to those skilled in the art, accordingly, it is intended to embrace all such alternatives, modifications and variations that fall within the spirit and broad scope of the appended claims.

## Claims

1. A method for encoding and decoding comprising:
(a) encoding a code surface by attaching a number of conductive stripes on a non-conductive layer, wherein each strip partly covers a segment of said non-conductive layer, the length of each of said strips on said segment represents a value and a combination of said values represent a code;
(b) reading said code by attaching an array of contacts - divided into segments according to said code surface segments - to said code surface wherein reading method is:
(i) said conductive strips make a common connection between some of said contacts that attached to said conductive strips while the rest of said contacts remain isolated, determinates "isolated contacts" and "connected-contacts"; and
(ii)said common connection of said connected-contacts of each segment recognizes the length of said conductive strip; and
(c) decoding said code by recognizing said combination of values according to the length of said strips.

2. The method for encoding and decoding of claim 1 wherein said reading method is:
(i) said conductive strips make an electric connection with some of said contacts that attached to said conductive strips while the rest of said contacts remain isolated, determinates "isolated contacts" and "connected-contacts"; and
(ii) said conductive strips are connected to an electric power and said electric power connected to said connected-contacts and said electric power enables recognition of said connected-contacts.

3. The method for encoding and decoding of claim 1 or claim 2 wherein said conductive strips start covering said segments in a common edge of said non-conductive layer.

4. The method for encoding and decoding of claim 1 or claim 2 wherein said non-conductive layer is circular, said segments are circular and each of said conductive strip covers a sector of a segment.

5. The method for encoding and decoding of claim 4, wherein said conductive strips cover said sectors, start covering from a common radius.

6. The method for encoding and decoding of claims 1 to 5, wherein said strips are non-conductive and said layer is conductive.

7. A system for encoding and decoding comprising:
(a) a code surface includes:
(i) a non-conductive surface, divided into segments; and
(ii) a number of conductive strips, each strip is attached and covers a segment of said non-conductive surface, wherein length of said strip represents a value and a combination of values represents a code;
(b) a code reader includes an contacts-array divided into segments of contacts, said contacts-array is to be attach to the code surface for reading said code; and
(c) a controller operative for:
(i) recognizing the location of connected-contacts that match said conductive strips;
(ii) calculating the length of strip of each said segments, according to the number of said connected-contacts in a segment that connected to said strips; and
(iii) decoding said code according to a combination of said length of said strips.

8. The system of claim 7 wherein the recognition of said connected-contacts is based on the common connection of said connected-contacts, said common connection is made via said conductive strips.

9. The system of claim 7 wherein said conductive strips are connected to an electric power and the recognition of said connected-contacts is based on the connection of said connected-contacts to said power via said strips.

10. The system of claim 7, further includes a solar cell located on said code surface for supplying said electric power and further includes a light source located on said reader for activating said solar cell.

11. The system of claim 7 wherein said conductive strips start covering said segments in a common edge of said code surface.

12. The system of claim 7 wherein said code surface is a circular label comprising a non-conductive layer divided into circular segments and a conductive strips that attached to said segments and said reader includes circular array of contacts divided to a segments according to said segments of said non-conductive layer.

13. The system of claim 12 wherein said strips start covering said segments in a common radius.

14. The system of claim 12 wherein said code surface further includes a conductive area in the center of said circular label, said conductive area is connected to said strips for supplying power to said strips and wherein said power is supplied via the center of said reader, enables recognizing said connected-contacts by sensing power.

15. The system of claim 14 wherein said conductive area is connected to said strips by means of thin conductor, said power burns said thin conductor in the first reading enables recognition of previous use.

16. The system of claim 7 wherein said code surface comprised of a conductive surface and anon-conductive layer with holes attached to said conductive surface, arrangement of said holes represent a code and decoding is done by recognizing the location of said connected-contacts according to a connection with said conductive surface via said holes and recognizing said arrangement.

17. A system for read information from an in-use medicine package by reading a label located in the bottom of said in-use medicine package, comprising:
(a) a medicine package holder that holds said in-use medicine package turned over wherein its' bottom up;
(b) a circular label - divided to circular segments - that attached to the bottom of said in-use medicine package, said circular label comprised of a non-conductive layer and conductive strips covering segments of said non-conductive surface, length of said strips represent a code;
(c) a reader, pivotally joined to said holder, that rotates and attached to said label, said reader comprised of a circular contacts array divide to segments according to said label segments; and
(d) a controller operative for:
(i) recognizing contacts of said circular contacts array that connected to said conductive strips;
(ii) calculating length of each strip according to the number of said connected-contacts; and
(iii) decoding said code according length of said strips.

18. The system of claim 17 wherein said circular label further includes a conductive area in the center of said label, connected to said strips via a thin conductor, said thin conductor is burned in the first use by a power that supplied by the reader, and said controller is further operative for recognizing previous use of said medicine package by checking the existing of said thin conductor.
